# EUROPEAN PATENT APPLICATION

(11) **EP 1 964 467 A1**
(43) Date of publication of application: **03.09.2008**
(21) Application number: 08466004.2
(22) Date of filing: 22.02.2008
(51) Int. Cl.: A01K 1/015

(54) **Method of production of ecological multipurpose litter**

(30) Priority: 27.02.2007 CZ 20070162
(71) Applicant: Asan-CZ s.r.o., 398 01 Mirotice (CZ)
(72) Inventor: Janicki, Vladimir, 398 43 Slabcice (CZ); Jandejsek, Frantisek, 396 01 Humpolec (CZ); Karafiat, Tomas, 397 01 Pisek (CZ)
(74) Representative: Langrova, Irena

(57) **Abstract**

It is a way of producing environment-friendly multi-purpose bedding that can be used as bedding for small domestic and laboratory animals. It can also be used for removing the effects of ecological disasters or as an absorber of liquids that leaked during transport of machinery. The input kinds of materials for production of the bedding come from industrially clean waste created in production of sanitary aids and also from raw materials that are created by processing plants for the textile industry.

First of all pressing (1) is carried out for each individual kinds of input materials (a, b, c) in one-kind packages 2, another step in the production method is plucking (3) of the predetermined combination and number of packages (2) of various kinds of materials. By plucking (3), loosened matter is produced that has the optimum size for granulating. The loosened matter goes through conveyors (4) and (5) to the process of doping (6), in which additives are added.

Subsequently, the loosened matter enters granulators (7) that thicken it to the required volume weight and shape of the granulated product, while the loosened matter is heated in the granulator (7), it is pressed and the granulated product is created that enters a conveyor (8). Then the granulated product is cooled in the cooling conveyor (9). It is then led to the rotation deduster (11), in which undesirable particles from mechanical fragments are exhausted (13) that come back to the start of production, and at the same time the granulated product is cooled down flowing air.

## Description

### The technology area

The invention belongs to the area of breeding domestic and laboratory animals, or more precisely it regards the equipment in care for their hygiene.

### The state of technology

According to the current state of technology, a similar solution is known that is described in Czech patent no. 282332. According to the document, a mixture is first produced from the industrial waste in production of sanitary products, containing more than 50 % by weight of cellulose, 5 % to 15 % by weight of polyolefins and 0.1 % to 1 % by weight of the absorber. The mixture is further supplemented with 0.1 to 0.2 % by weight of the soaking agent water-thinned in the ratio of 1:3 to 1:10, it is homogenized and pressed through. The mixture is heated to the temperature of 80 - 100°C when the polyolefin parts are partly plasticized and the water parts are pressed and warmed so that they are expanded during transfer from the high-pressure environment to the environment with the atmospheric pressure and so that cracks are created inside and on the surface of the material that increase its active surface. Partly plasticized polyolefin parts maintain cohesion of the expanded material. In final treatment it is cut off to granules.

Also, solution according to Czech patent no. 288405 is known, in which bedding for small animals has the shape of granules that are produced from waste of hygienic products.
The bedding includes more than 50 % by weight of cellulose, 0.1 to 1% by weight of absorber, 5 to 17% by weight of plaster stone, 3 to 15 % by weight of partly plasticized polyolefin. 0.1 to 0.2 % by weight of the soaking agent is added to the bedding as well as aromatic substances. The density of bedding ranges from 250 to 450 kg/m³. The height of granules is not very different from their diameter.

### The nature of the invention

The way of producing environment-friendly multi-purpose bedding according to this solution, in which input kinds of materials come from industrially clean waste in production of sanitary aids and also from raw materials that are created by processing plants for the textile industry.
The solution is based on the fact that first of all, pressing of one-kind packages is carried out for each individual kinds of input materials.
Another step is plucking of the predetermined combination and number of packages of various kinds of materials, and by plucking, loosened matter is created that obtains the optimum size for granulating. The loosened matter goes through conveyors to the process of doping, in which additives are added.
Subsequently, the loosened matter enters granulators that thicken it to the required volume weight and shape of the granulated product.

The loosened matter is heated in the granulator, it is pressed and a granulated product is created that enters the conveyor. The granulated product is cooled down in the cooling conveyor by being placed in the optimum layer and in the optimum speed of movement.
It is then led to the rotation deduster, in which undesirable particles from mechanical fragments are exhausted that come back to the start of production. The granulated product is cooled down by flowing air and it is filled in big bags. In the advantageous make, the loosened matter is saturated by the diseases indicator after doping. The doping includes hemp shive doping.

The advantage of the solution is doping with absorbents with cellulose and also doping with treated hemp shive. This is used not only for improving the soaking capacity and for obtaining environment-friendly, natural and degradable parameter, but also for natural aromatization of the final product - bedding.
Another advantage of the production method is ensuring indication of diseases, i. e. preventing inspection of the health condition of domestic or laboratory animals, or also ensuring prevention by finding out pH and indication of the urological syndrome.

### List of the figures in the drawing

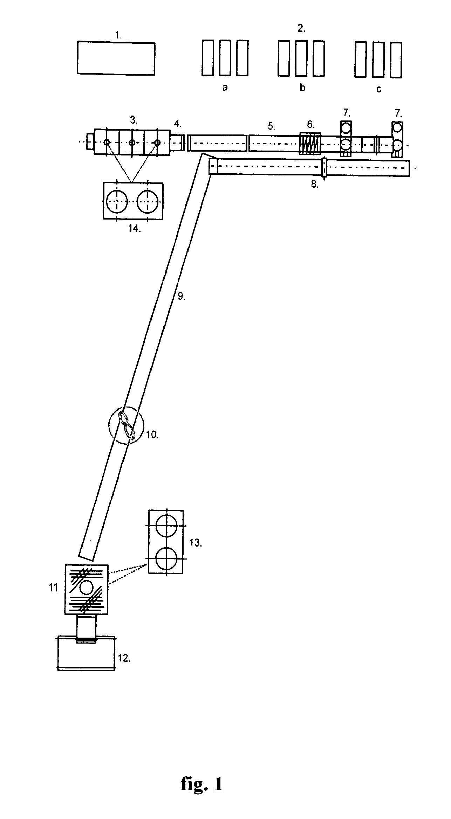

Example of the proposed method is presented in figure 1, from which the production procedure scheme is apparent.

### The example of the invention

In producing environment-friendly multi-purpose bedding, the input kinds of materials a, b, c come from naturally clean waste in production of sanitary aids. These may include wastes created in production of sanitary towels for women, waste in production of non-woven textiles used as surgery or post-surgery drapes and also waste in production of disposable nappies, whether they include an absorbent or not.

In this way, first of all pressing 1 is carried out for each individual kinds of input materials a, b, c in one-kind packages 2. Packages 2 are then plucked 3 in the predetermined combination and number of packages 2 of various kinds of input materials a, b, c. By plucking 3, matter is produced that has the optimum size for granulating bedding. Plucking 3 is carried out in the drum of the three-sequence breaker with the plucking intensity adapted in such a way that matter of coherent size is created that can be granulized.
The loosened matter goes through conveyors 4, 5 that can include conveyor belts, spiral conveyors or tray conveyors.

Another step is the process of doping 6, in which additives of superabsorbent with cellulose are added as well as a soaking agent. Mineral substances can be added, such as ground lime or bentonite. The loosened matter is saturated with the diseases indicator and also treated hemp shive is added.

Then the loosened matter enters granulators 7, in which the pressure reaches the ranges of 10 - 100 atm. The loosened matter is heated and pressed, a granulated product is created with the required volume weight and shape. Its soaking capacity reaches up to 400%, which is achieved by the difference of pressure after leaving the granulator to the surrounding atmosphere when steam contained in the product expands and creates micropores.

In the following procedure, the granulated product enters a conveyor 8 and it is cooled down in the cooling conveyor 9 by being placed in the optimum layer and in the optimum speed of movement.

The granulated product is fed to the screen classifier, which is the rotation deduster 11 in this case. Here, undesirable particles from mechanical fragments are exhausted 13 that do not correspond with the required shape and type of the final product. Undesirable particles then return to the start of the production process. The granulated product is also cooled by flowing air and at the end of the process it is filled 12 in big bags and it is dispatched.

The environment-friendly multi-purpose bedding that was produced in this way can be used as bedding for small domestic and laboratory animals. It can also be used for removing the effects of ecological disasters or as an absorber of liquids that leaked during transport of machinery.

### List of reference symbols

1 - pressing
2 - package
3 - plucking
4, 5 - conveyor
6 - doping
7 - granulator
8 - conveyor
9 - cooling conveyor
10 - ventilator
11 - rotating deduster
12 - filling
13 - exhaustion
a, b, c - input kinds of materials

## Claims

1. The way of producing environmental-friendly multi-purpose bedding that can be used as bedding for small domestic animals and for keeping laboratory animals and it can be further used for removal of effects of ecological disasters and it can also be used as an absorber of liquids that leaked during transport of machinery, in which the input kinds of materials come from industrially clean waste in production of sanitary aids and also from raw materials that are produced by processing of herbs for textile industry,
**characterized in that** first of all in each of the individual kinds of input materials a, b, c, the following is carried out - pressing of (1) one-kind packages (2),
another step in the way of production is plucking (3) of the predetermined combination of the number of packages (2) of various kinds of materials,
while plucking (3) produces loosened matters that obtains the optimum size for granulating,
the loosened matter goes through conveyors (4) and (5) for the process of doping (6), in which additives are added,
then the loosened matter enters granulators (7) that thicken it to the required volume weight and the shape of the granulated product, while in the granulator (7) the loosened matter is heated, it is pressed and a granulated product is created that enters the conveyor (8),
then the granulated product is cooled down in the cooling conveyor (9) by being placed in the optimum layer and at the optimum speed of movement,
and it is further fed to the rotation deduster (11), in which undesirable particles of mechanical fragments are exhausted (13) that come back to the beginning of the production process, and at the same time the granulated product is cooled down by flowing air, and finally filling (12) to big bags is carried out.

2. The way of producing environmental-friendly multi-purpose bedding according to the Claim 1., **characterized in that** the loosened matter is saturated by the diseases indicator after doping (6).

3. The way of producing environmental-friendly multi-purpose bedding according to the Claim 1., **characterized in that** the doping (6) also includes hemp shive doping.

4. The way of producing environmental-friendly multi-purpose bedding according to the Claim 1., **characterized in that** the ventilator (10) cools down the granulated product by the cooling conveyor (9) during the process.
